(19) Europäisches Patentamt
European Patent Office
Office européen des brevets

(11) Veröffentlichungsnummer: **0 504 556 A2**

# (12) EUROPÄISCHE PATENTANMELDUNG

(21) Anmeldenummer: **92101119.3**

(22) Anmeldetag: **24.01.92**

(51) Int. Cl.$^5$: **C08L 67/02**, C08L 51/04, C08L 33/12, C08L 25/12

(30) Priorität: **14.02.91 DE 4104405**

(43) Veröffentlichungstag der Anmeldung: **23.09.92 Patentblatt 92/39**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **McKee, Graham Edmund, Dr.**
**Kastanienweg 8**
**W-6940 Weinheim(DE)**
Erfinder: **Plitzko, Klaus-Dieter, Dr.**
**Albert-Einstein-Allee 33**
**W-6703 Limburgerhof(DE)**

## (54) Thermoplastische Formmassen.

(57) Thermoplastische Formmassen, erhältlich durch thermische Behandlung einer Mischung aus thermoplastischen Polyester-Elastomeren A), ggf. Polyestern B), und Pfropfpolymerisaten C/I und/oder Polymerisaten C/II bei Temperaturen im Bereich von 100°C bis 300°C über einen Zeitraum von 5 Minuten bis 100 Stunden.

EP 0 504 556 A2

Die vorliegende Erfindung betrifft thermoplastische Formmassen, erhältich durch thermische Behandlung einer Mischung aus

A) 1 bis 99 Gew.-% eines thermoplastischen Polyester-Elastomeren

B) 0 bis 50 Gew.-% eines Polyesters

C) 1 bis 99 Gew.-% eines Pfropfpolymerisat C/I, aufgebaut aus

$c_1$) 30 bis 90 Gew.-% einer Pfropfgrundlage aus einem kautschukelastischen Polymeren mit einer Glasübergangstemperatur von unter 0° C

$c_2$) 10 bis 70 Gew.-% einer Pfropfauflage aus

$c_{21}$) 50 bis 90 Gew.-% Styrol oder substituierten Styrolen der allgemeinen Formel I

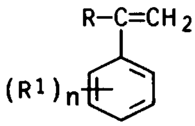

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen

$c_{22}$) 10 bis 50 Gew.-% Acrylnitril oder Methacrylnitril oder deren Mischungen

$c_{23}$) 0 bis 30 Gew.-% eines polymerisierbaren Monomeren mit Carboxyl-, Carboxylderivat-, Hydroxyl- oder Epoxygruppen oder

$c_{24}$) 30 bis 100 Gew.-% Methylmethacrylat

$c_{25}$) 0 bis 70 Gew.-% Styrol oder substituierten Styrolen der allgemeinen Formel I oder deren Mischungen

$c_{26}$) 0 bis 50 Gew.-% Acrylnitril oder Methacrylnitril oder deren Mischungen

$c_{27}$) 0 bis 30 Gew.-% eines polymerisierbaren Monomeren mit Carboxyl-, Carboxylderivat, Hydroxyl- oder Epoxygruppen

oder eines Polymerisats C/II aus

$c_3$) 50 bis 90 Gew.-% Styrol oder substituierten Styrolen der allgemeinen Formel I oder deren Mischungen

$c_4$) 10 bis 50 Gew.-% Acrylnitril oder Methacrylnitril oder deren Mischungen

$c_5$) 0 bis 30 Gew.-% eines polymerisierbaren Monomeren mit Carboxyl-, Carboxylderivat-, Hydroxyl- oder Epoxygruppen

oder

$c_6$) 30 bis 100 Gew.-% Methylmethacrylat

$c_7$) 0 bis 70 Gew.-% Styrol oder substituierten Styrolen der allgemeinen Formel I oder deren Mischungen

$c_8$) 0 bis 50 Gew.-% Acrylnitril oder Methacrylnitril oder deren Mischungen

$c_9$) 0 bis 30 Gew.-% eines polymerisierbaren Monomeren mit Carboxyl-, Carboxylderivat-, Hydroxyl- oder Epoxygruppen

oder Mischungen aus C/I und C/II

und

D) 0 bis 50 Gew.-% faser- oder teilchenförmige Füllstoffe oder deren Mischungen bei einer Temperatur im Bereich von 100° C bis 300° C über einen Zeitraum von 5 Minuten bis 100 Stunden.

Weiterhin betrifft die Erfindung ein Verfahren zur Herstellung derartiger Formmassen, deren Verwendung zur Herstellung von Fasern, Folien und Formkörpern sowie die hierbei erhältlichen Formkörper.

Aus der GB-A 2 087 903 sind Formmassen aus thermoplastischen Polyester-Elastomeren und mit Styrol und Methylmethacrylat gepfropften Kautschuken bekannt.

Die US-A 4 508 870 und die japanische Schrift 56041-242 beschreiben Formmassen aus thermoplastischen Polyester-Elastomeren und Pfropfpolymerisaten aus Acrylnitril, Butadien und Styrol.

Aus der japanischen Schrift 57096-037 sind Formmassen aus thermoplastischen Polyester-Elastomeren und kautschukmodifiziertem Polybutylenterephthalat bekannt.

Die japanische Schrift 58025-356 beschreibt Formmassen aus thermoplastischen Polyester-Elastomeren, Pfropfpolymerisaten aus Acrylnitril, Butadien und Styrol und Polyester.

Aus der japanischen Schrift 57065-748 sind schließlich Formmassen aus thermoplatischen Polyester-Elastomeren, Pfropfpolymerisaten aus Acrylnitril, Butadien und Styrol sowie Polybutylenterephthalat bekannt.

Eine thermische Behandlung zur Verbesserung der Eigenschaften wird in diesen Schriften nicht erwähnt.

Diese bekannten Produkte weisen jedoch ein nicht zufriedenstellendes Eigenschaftsprofil auf. Insbesondere in Hinblick auf die mechanischen Eigenschaften wie Kerbschlagzähigkeit, Zähigkeit bei biaxialer Beanspruchung und Reißdehnung wäre es wünschenswert, das Eigenschaftsprofil zu optimieren. Auch die Oberflächenbeschaffenheit der aus diesen Produkten hergestellten Formkörper ist unbefriedigend.

Aufgabe der vorliegenden Erfindung war es daher, thermoplastische Formmassen zur Verfügung zu stellen, die in dieser Richtung optimiert sind.

Diese Aufgabe wird erfindungsgemäß gelöst durch die eingangs definierten thermoplastischen Formmassen gemäß Anspruch 1.

Bevorzugte Massen dieser Art sind den Unteransprüchen zu entnehmen.

Weiterhin wurde ein Verfahren zur Herstellung derartiger Formmassen, deren Verwendung zur Herstellung von Fasern, Folien und Formkörpern sowie die hierbei erhältlichen Formkörper gefunden.

Als Komponente A) enthalten die erfindungsgemäßen thermoplastischen Formmassen 1 bis 99 Gew.-%, bevorzugt 2 bis 90 Gew.-%, insbesondere 2 bis 60 Gew.-%, eines thermoplastischen Polyester-Elastomeren.

Unter Polyester-Elastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten.

Derartige Produkte sind an sich bekannt und in der Literatur beschrieben. Nur beispielsweise sei hier auf die US-Patente 3 651 014, 3 784 520, 4 185 003 und 4 136 090, sowie auf einige Veröffentlichungen von G.K. Hoeschele (Chimia 28, (9), 544 (1974); Angew. Makromolek. Chemie 58/59, 299 - 319 (1977) und Pol. Eng. Sci. 1974, 848) verwiesen. Auch im Handel sind entsprechende Produkte unter den Bezeichnungen Hytrel® (DuPont), Arnitel® (Akzo) sowie Pelprene® (Toyobo Co. Ltd.) erhältlich.

Ganz allgemein setzen sich thermoplastische Copolyetherester-Elastomere aus langkettigen Segmenten der allgemeinen Formel

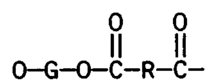

und kurzkettigen Segmenten der allgemeinen Formel

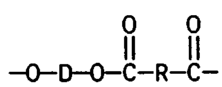

zusammen,
wobei

- G einen zweiwertigen Rest, der nach der Entfernung der terminalen Hydroxylgruppen aus einem Poly(alkylenoxid)glykol mit einem Molekulargewicht von vorzugsweise 200 bis 6000, insbesondere 600 bis 4000 entsteht,
- D einen zweiwertigen Rest, der nach Entfernung der terminalen Hydroxylgruppen aus einem niedermolekularen Diol mit einem Molekulargewicht von vorzugsweise weniger als 250 entsteht, und
- R einen zweiwertigen Rest, der nach Entfernung der Carboxylgruppen aus einer Dicarbonsäure mit einem Molekulargewicht von vorzugsweise weniger als 300 entsteht,

darstellen.

Unter dem Molekulargewicht soll hier das Zahlenmittel verstanden werden.

Es versteht sich, daß auch Mischungen von mehreren Poly(alkylenoxid)glykolen, mehreren Diolen oder mehreren Dicarbonsäuren eingesetzt werden können.

Die Poly(alkylenoxid)glykole HO-G-OH haben vorzugsweise einen Schmelzpunkt von weniger als 55 °C und ein Kohlenstoff/Sauerstoff-Molverhältnis von vorzugsweise 2 bis 10, insbesondere 2 bis 6.

Beispiele für Poly(alkylenoxid)glykole sind Poly(ethylenoxid)glykol, Poly(1,2-propylenoxid)glykol, Poly-(1,3-propylenoxid)glykol, Poly(1,2-butylenoxid)glykol, Poly(1,3-butylenoxid)glykol, Poly(1,4-butylenoxid)-glykol, Poly(pentamethylenoxid)glykol, Poly(hexamethylenoxid)glykol, Poly(heptamethylenoxid)glykol, Poly-(octamethylenoxid)glykol, Poly(nonamethylenoxid)glykol sowie statistische oder Blockcopolymere aus verschiedenen der vorstehend genannten Glykole. Bevorzugt werden Poly(ethylenoxid)glykol, Poly(1,2-propylenoxid)glykol, Poly(1,3-propylenoxid)glykol und Poly(1,4-butylenoxid)glykol sowie deren Mischungen. Der Gewichtsanteil der langkettigen Segmente, die sich von den vorstehenden Polyalkylenoxidglykolen und Dicarbonsäuren ableiten, liegt im allgemeinen im Bereich von 5 bis 70 Gew.-%, vorzugsweise von 7 bis 50 Gew.-%, bezogen auf das Gesamtgewicht der Komponente A).

Als Diole HO-D-OH kommen ganz allgemein niedermolekulare Diole mit Molekulargewichten von vorzugsweise weniger als 250 in Betracht. Diese können lineare oder verzweigte, cycloaliphatische oder aromatische Grundstrukturen aufweisen.

Diole mit 2 bis 15 C-Atomen werden bevorzugt. Beispielhaft seien hier nur 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere, Decamethylendiol, die isomeren Dihydroxycyclohexane, Resorcin, Hydrochinon und die verschiedenen Dihydroxynaphthaline genannt. Von diesen werden besonders aliphatische Diole mit 2 bis 8, insbesondere 2 bis 4 C-Atomen bevorzugt (1,2-Ethandiol, 1,3-Propandiol, 1,4-Butandiol).

Auch ungesättigte Diole haben sich in einigen Fällen als geeignet herausgestellt, z.B. But-2-en-1,4-diol, insbesondere in Mischung mit den vorstehend genannten gesättigten Diolen. Beispiele für Polyetherester aus derartigen Mischungen sind der EP-A 49 823 zu entnehmen.

Schließlich sind als Diole auch noch Diphenole wie 4,4-Dihydroxydiphenyl, Di-(4-hydroxyphenyl)methan und 2,2-Di-(4-hydroxyphenyl)propan (häufig als Bisphenol A bezeichnet) zu nennen.

Selbstverständlich können anstelle der Diole auch deren esterbildende Derivate eingesetzt werden; in diesen Fällen kann das Molekulargewicht natürlich je nach Art des Derivats auch mehr als 250 betragen, da der bevorzugte Molekulargewichtsbereich (MG < 250) sich auf die Diole selbst bezieht.

Die Dicarbonsäuren HOOC-R-COOH haben vorzugsweise Molekulargewichte von weniger als 300 und können aromatisch, aliphatisch oder cycloaliphatisch sein. Die Dicarbonsäuren können auch Substituenten aufweisen, die im Verlauf der Polymerisationsreaktion nicht stören.

Als Beispiele für aromatische Dicarbonsäuren seien Terephthalsäure, Isophthalsäure, substituierte Dicarbonsäuren der allgemeinen Formel

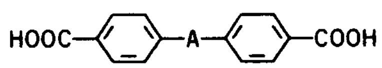

wobei A eine chem. Bindung, eine Alkylengruppe mit 1 bis 3 C-Atomen, -CO-, -S- oder $-SO_2-$ ist, 1,5-, 2,6- und 2,7-Naphthalindicarbonsäure und deren $C_1$- bis $C_6$-alkylsubstituierten Derivate genannt. Von diesen werden Terephthalsäure, Isophthalsäure, deren Mischungen oder Mischungen aus Terephthalsäure oder Isophthalsäure mit anderen Dicarbonsäuren bevorzugt.

Aliphatische Dicarbonsäuren, die eingesetzt werden können sind beipsielsweise Oxalsäure, Fumarsäure, Maleinsäure, Citraconsäure, Sebacinsäure, Adipinsäure, Glutarsäure, Succinsäure, Azelainsäure, um nur einige zu nennen.

Es versteht sich, daß auch Mischungen verschiedener aliphatischer Dicarbonsäuren eingesetzt werden können. Wie im Fall der Diole können anstelle der Säuren selbst auch deren esterbildende Derivate eingesetzt werden. Dies hat sich in einigen Fällen auch als besonders vorteilhaft herausgestellt.

Wegen weiterer langkettiger Glykole HO-G-OH, kurzkettiger Diole HO-D-OH und Dicarbonsäuren HOOC-R-COOH sei auf die US-A 3 651 014 verwiesen.

Wie bereits vorstehend erwähnt, beträgt der Anteil der langkettigen Segmente im allgemeinen 5 bis 70 Gew.-%, vorzugsweise 7 bis 50 Gew.-% und der Anteil der kurzkettigen Segmente entsprechend 30 bis 95 Gew.-%, vorzugsweise 50 bis 93 Gew.-%. Der Gewichtsanteil der jeweiligen Segmente beeinflußt unter anderem die Härte der Produkte.

Die Dicarbonsäuren in den langkettigen und kurzkettigen Segmenten können dabei gleich oder verschieden sein; ebenso können auch bei der Herstellung der langkettigen bzw. kurzkettigen Segmente Mischungen von Diolen oder Dicarbonsäuren eingesetzt werden.

Die vorstehenden Ausführungen zeigen, daß eine Vielzahl verschiedener segmentierter Co-(polyetherester) als Komponente A) eingesetzt werden kann. Von diesen werden Copolyetherester, deren langkettige Einheiten sich von Poly(1,4-alkylenoxid)glykol mit einem Molekulargewicht von 600 bis 2000, Terephthalsäure und 1,4-Butandiol ableiten, bevorzugt.

In einigen Fällen hat es sich als vorteilhaft erwiesen, einen Teil der Terephthalsäure durch Isophthalsäure, Adipinsäure oder Sebacinsäure oder einen Teil des 1,4-Butandiols durch andere Diole, z.B. 1,3-Propandiol, 1,5-Pentandiol oder But-2-en-1,4-diol zu ersetzen. Derartige Produkte werden in der US-A 3 651 014 und der EP-A 49 823 beschrieben.

Verfahren zur Herstellung segmentierter Co(polyetherester) sind an sich bekannt und in der Literatur beschrieben, so daß sich hier nähere Angaben erübrigen. Hier sei nur auf US-A 3 651 014, US-A 3 784 520 und einen übersichtsartikel von G.K. Hoeschele (Chimia 28, 544 (1974)) verwiesen.

Die Co(polyetherester) A) können zur Stabilisierung gegen thermischen oder oxidativen Abbau Stabilisatoren enthalten, wie dies beispielsweise in den US-A 4 136 090 und 4 185 003 sowie einem Artikel von G.K. Hoeschele (Angew. Makromolekulare Chemie 58/59, 299 - 319 (1977)) zu entnehmen ist.

Als Komponente B) enthalten die erfindungsgemäßen Formmassen 0 bis 50 Gew.-%, insbesondere 0 bis 40 Gew.-% eines Polyesters.

Derartige Polyester B) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$- bis $C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Ester oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$- bis $C_6$-Diolkomponente, z.B. Polyethylenterephthalat, Polyethylennaphthalat, Polypropylenterephthalat oder Polybutylenterephthalat oder deren Mischungen werden besonders bevorzugt.

Als Komponente C) enthalten die erfindungsgemäßen thermoplastischen Formmassen 1 bis 99 Gew.-%, vorzugsweise 10 bis 98 Gew.-%, insbesondere 40 bis 98 Gew.-% eines Pfropfpolymerisats C/I, aufgebaut aus

$c_1$) 30 bis 90 Gew.-%, vorzugsweise 40 bis 80 Gew.-% einer Pfropfgrundlage aus einem kautschukelastischen Polymeren mit einer Glasübergangstemperatur von unter 0 °C

$c_2$) 10 bis 70 Gew.-%, vorzugsweise 20 bis 60 Gew.-% einer Pfropfauflage aus

$c_{21}$) 50 bis 90, vorzugsweise 60 bis 80 Gew.-% Styrol oder substituierten Styrolen der allgemeinen Formel I oder deren Mischungen

$c_{22}$) 10 bis 50, vorzugsweise 20 bis 40 Gew.-% Acrylnitril oder Methacrylnitril oder deren Mischungen und

$c_{23}$) 0 bis 30, vorzugsweise bis zu 20 Gew.-% eines polymerisierbaren Monomeren mit Carboxyl-, Carboxylderivat-, Hydroxyl- oder Epoxygruppen

oder

$c_{24}$) 30 bis 100, vorzugsweise 50 bis 100 Gew.-% Methylmethacrylat

$c_{25}$) 0 bis 70, vorzugsweise bis zu 50 Gew.-% Styrol oder substituierten Styrolen der allgemeinen Formel I oder deren Mischungen

$c_{26}$) 0 bis 50, vorzugsweise bis zu 40 Gew.-% Acrylnitril oder Methacrylnitril oder deren Mischungen

$c_{27}$) 0 bis 30, vorzugsweise bis zu 20 Gew.-% eines polymerisierbaren Monomeren mit Carboxyl-, Carboxylderivat-, Hydroxyl- oder Epoxygruppen

oder eines Polymerisats C/II aus

$c_3$) 50 bis 90, vorzugsweise 55 bis 90 und insbesondere 65 bis 80 Gew.-% Styrol und/oder substituierten Styrolen der allgemeinen Formel I und

$c_4$) 10 bis 50, vorzugsweise 10 bis 45 und insbesondere 20 bis 35 Gew.-% Acrylnitril und/oder Methacrylnitril,

$c_5$) 0 bis 30, vorzugsweise bis zu 20 Gew.-% eines polymerisierbaren Monomeren mit Carboxyl-, Carboxylderivat-, Hydroxyl- oder Epoxygruppen,

oder

$c_6$) 30 bis 100, vorzugsweise mehr als 60 Gew.-% Methylmethacrylat

$c_7$) 0 bis 70, vorzugsweise bis zu 50 Gew.-% Styrol oder substituierten Styrolen der allgemeinen Formel I oder deren Mischungen

$c_8$) 0 bis 50, vorzugsweise bis zu 30 Gew.-% Acrylnitril oder Methacrylnitril oder deren Mischungen

$c_9$) 0 bis 30, vorzugsweise bis zu 20 Gew.-% eines polymerisierbaren Monomeren mit Carboxyl-, Carboxylderivat-, Hydroxyl- oder Epoxygruppen,

oder Mischungen aus C/I und C/II.

Für die Pfropfgrundlage $c_1$) kommen Polymerisate in Frage, deren Glasübergangstemperatur unterhalb von 0 °C, vorzugsweise unterhalb von -20 °C liegt.

Dies sind z.B. Naturkautschuk, Synthesekautschuke auf der Basis von konjugierten Dienen, ggf. mit anderen Copolymeren sowie Elastomere auf der Basis von $C_1$- bis $C_8$-Alkylestern der Acrylsäure oder Methacrylsäure, die ggf. ebenfalls weitere Comonomere enthalten können.

Elastomere des letztgenannten Typs werden vorzugsweise vernetzt, was durch Mitverwendung von mindestens difunktionellen Monomeren erfolgen kann, die vorzugsweise zur Copolymerisation befähigte ethylenische Doppelbindungen enthalten.

Beispielsweise seien Divinylbenzol, Diallylmaleat, Diallylfumarat, Diallylphthalat, Triallyl(iso)cyanurat, Tricyclodecenylacrylat, Butandioldiacrylat, Butadien und Dihydrodicyclopentadienylacrylat genannt. Der Anteil an solchen Monomeren, nachstehend bei der Beschreibung der bevorzugten Pfropfgrundlagen mit $c_{12}$) bzw. $c_{15}$) bezeichnet, beträgt im allgemeinen 0,1 bis 5, vorzugsweise 0,5 bis 4 Gew.-%, bezogen auf die Gesamtmenge der Monomeren für die Pfropfgrundlage.

Weitere Beispiele sind Ethylen/Propylen (EP) oder Ethylen-Propylen-Dien Kautschuke (EPDM), wie sie kommerziell erhältlich sind oder Silikonkautschuke wie sie in der EP-A-231 776 beschrieben werden.

Nachstehend werden zwei besonders bevorzugte Arten von Pfropfgrundlagen beschrieben.

Zum einen sind dies Pfropfgrundlagen aus

$c_{11}$) 95 bis 99,9 Gew.-% eines $C_1$- bis $C_8$-Alkylesters der Acrylsäure oder Methacrylsäure oder deren Mischungen, insbesondere n-Butylacrylat und/oder 2-Ethylhexylacrylat, und

$c_{12}$) 0,1 bis 5 Gew.-% eines difunktionellen Monomeren, vorzugsweise Dihydrodicyclopentadienylacrylat oder Tricyclodecenylacrylat oder deren Mischungen.

Eine andere bevorzugte Gruppe sind Pfropfgrundlagen auf der Basis von

$c_{13}$) 50 bis 100 Gew.-% eines konjugierten Diens, vorzugsweise Butadien-1,3,

$c_{14}$) 0 bis 50 Gew.-% Styrol, Acrylnitril, Methacrylnitril und/oder $C_1$- bis $C_8$-Alkylestern der Acrylsäure oder Methacrylsäure und

$c_{15}$) 0 bis 5 Gew.-% eines vernetzenden Monomeren.

Pfropfgrundlagen der beiden vorgenannten Arten sind an sich bekannt und in der Literatur beschrieben, beispielsweise in der DE-PS 24 44 584 und der DE-PS 12 60 135 und der EP-A-1245 um nur drei Beispiele zu nennen.

Auf die Pfropfgrundlage $c_1$) ist eine Pfropfhülle $c_2$) aufgepfropft, die durch Polymerisation von $c_{21}$), $c_{22}$) und $c_{23}$) oder $c_{24}$), $c_{25}$), $c_{26}$) und $c_{27}$) erhältlich ist.

Beispiele für substituierte Styrole der allgemeinen Formel I sind $\alpha$-Methylstyrol, p-Methylstyrol, p-Chlorstyrol und p-Chlor-$\alpha$-Methylstyrol, wovon Styrol und $\alpha$-Methylstyrol bevorzugt werden.

Die Pfropfhülle $c_2$) kann in einem oder in mehreren, z.B. zwei oder drei, Verfahrensschritten hergestellt werden, die Bruttozusammensetzung bleibt davon unberührt.

Falls Monomere $c_{23}$) oder $c_{27}$) vorhanden sind, beträgt deren Anteil an der Pfropfhülle $c_2$) bis zu 30, vorzugsweise 0,2 bis 20 und insbesondere 0,5 bis 10 Gew.-%, bezogen auf das Gesamtgewicht von $c_2$).

Beispiele für Monomere $c_{23}$) und $c_{27}$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure, (Meth)acrylsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall- und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren $c_{23}$) bzw. $c_{27}$) sind Lactamgruppen enthaltende Monomere geeignet.

Diese enthalten eine Lactamgruppe der allgemeinen Formel

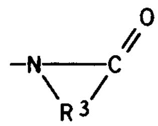

wobei $R^3$ eine verzweigte oder lineare Alkylengruppe mit 2 bis 15 C-Atomen darstellt.

Nur stellvertretend seien hier $\beta$-Propiolactame (Azetidin-2-one) der allgemeinen Formel

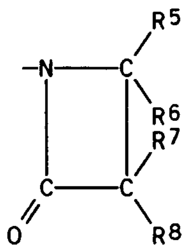

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Ein Beispiel hierfür ist 3,3'-Dimethyl-3-propiolactam.

Weitere geeignete Lactame sind

$\epsilon$-Caprolactam

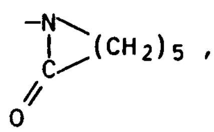

2-Pyrrolidone

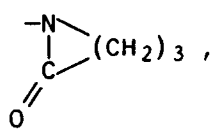

7-Önantholactam, 8-Capryllactam und 12-Laurinlactam, wie sie auch von H. Dachs, Angew. Chemie 74 (1962), 540-45 beschrieben werden.

Von diesen werden 2-Pyrrolidone und $\epsilon$-Caprolactame besonders bevorzugt.

Vorzugsweise sind die Lactamgruppen wie in

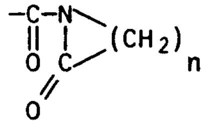

über eine Carbonylgruppe am Stickstoff in die entsprechenden Monomeren eingebaut.

Ein besonders bevorzugtes Beispiel hierfür ist N-(Meth)acryloyl-$\epsilon$-Caprolactam

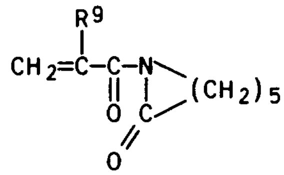

wobei $R^9$ ein Wasserstoffatom oder eine Methylgruppe ist.

Bevorzugte Monomere $c_{23}$) bzw. $c_{27}$) sind Glycidylester der Acrylsäure und Methacrylsäure, Maleinsäureanhydrid, tert.-Butylacrylat, Fumarsäure und Maleinsäure.

Vorzugsweise wird die Pfropfhülle in Emulsion oder in Lösung hergestellt, wie dies z.B. in der DE-PS 1 260 135, DE-OS 32 27 555, und der DE-OS 34 14 118 beschrieben ist. Bei der sogenannten Lösungspolymerisation wird die Pfropfgrundlage in einer Lösung der Pfropfmonomeren für die Pfropfauflage gelöst, wonach diese polymerisiert werden. Die Verfahrensbedingungen sind der Encyclopedia of Polymer Science and Engineering, Band 1, Seiten 406 - 408 zu entnehmen.

Je nach den gewählten Bedingungen entsteht bei der Pfropfmischpolymerisation ein bestimmter Anteil an freien Copolymerisaten der Monomeren $c_{21}$) bis $c_{23}$) bzw. $c_{24}$) bis $c_{27}$).

Das Pfropfmischpolymerisat ($c_1$) + $c_2$)) weist im allgemeinen eine mittlere Teilchengröße von 0,05 bis 10 µm, im besonderen von 0,08 bis 0,8 µm ($d_{50}$-Gewichtsmittelwert) auf. Die Bedingungen bei der Herstellung des Elastomeren $c_1$) und bei der Pfropfung werden daher vorzugsweise so gewählt, daß Teilchengrößen in diesem Bereich resultieren. Maßnahmen hierzu sind bekannt und z.B. in der DE-PS 1 260 135, der DE-AS 24 27 960 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat C/I zählen im Rahmen dieser Erfindung auch die bei der Pfropfmischpolymerisation zur Herstellung der Komponente $c_2$) entstehenden freien, nicht gepfropften Homo- und Copolymerisate.

Auch Mischungen verschiedener Pfropfpolymerisate C/I können eingesetzt werden.

Nachstehend seien einige bevorzugte Pfropfpolymerisate angeführt:

C/1 60 Gew.-% Pfropfgrundlage $c_1$) aus
- $c_{11}$) 98 Gew.-% n-Butylacrylat und
- $c_{12}$) 2 Gew.-% Dihydrodicyclopentadienylacrylat und 40 Gew.-% Pfropfhülle $c_2$) aus
- $c_{21}$) 71 Gew.-% Styrol und
- $c_{22}$) 24 Gew.-% Acrylnitril
- $c_{23}$) 5 Gew.-% Glycidylmethacrylat

C/2 Pfropfgrundlage wie bei C/1 mit 5 Gew.-% einer ersten Pfropfhülle aus Styrol und 35 Gew.-% einer zweiten Pfropfstufe aus
- $c_{21}$) 75 Gew.-% Styrol und
- $c_{22}$) 25 Gew.-% Acrylnitril

C/3 Pfropfgrundlage wie bei C/1 mit 13 Gew.-% einer ersten Pfropfstufe aus Styrol und 27 Gew.-% einer zweiten Pfropfstufe aus Styrol und Acrylnitril im Gewichtsverhältnis 72:28

C/4 Pfropfgrundlage wie bei C/1 mit 40 Gew.-% einer Pfropfhülle aus Styrol und Acrylnitril im Gewichtsverhältnis 75:25

C/5 Pfropfgrundlage wie bei C/1 mit 40 Gew.-% einer Pfropfhülle aus 100 Gew.-% Methylmethacrylat

C/6 60 Gew.-% Pfropfgrundlage $c_1$) aus
- $c_{13}$) 99 Gew.-% Butadien-1,3 und
- $c_{15}$) 1 Gew.-% t-Dodecylmercaptan und 40 Gew.-% Pfropfhülle $c_2$) aus
- $c_{21}$) 70 Gew.-% Styrol und
- $c_{22}$) 30 Gew.-% Acrylnitril

C/7 Pfropfgrundlage wie bei C/6 mit 40 Gew.-% Pfropfhülle aus
- $c_{24}$) 90 Gew.-% Methylmethacrylat und
- $c_{27}$) 10 Gew.-% n-Butylacrylat.

Bei den Polymerisaten C/II gilt hinsichtlich der Monomeren $c_5$) bzw. $c_9$) das vorstehend für die Komponenten $c_{23}$) bzw. $c_{27}$) Gesagte, worauf hier zur Vermeidung von Wiederholungen verwiesen wird.

Derartige Produkte können z.B. nach dem in den DE-AS 10 01 001 beschriebenen Verfahren hergestellt werden. Auch im Handel sind solche Polymere erhältlich. Vorzugsweise liegt der durch Lichtstreuung bestimmte Gewichtsmittelwert des Molekulargewichts im Bereich von 50.000 bis 500.000, insbesondere von

100.000 bis 250.000.

Auch Mischungen verschiedener Polymerisate C/II können eingesetzt werden.

Die Komponente C) kann entweder ein Pfropfpolymerisat C/I oder ein Polymerisat C/II oder aber auch Mischungen aus Pfropfpolymerisat und Polymerisat enthalten. Bevorzugt werden Mischungen aus C/I und C/II, wobei das Verhältnis von C/I : C/II in weiten Bereichen variiert werden kann. Als besonders geeignet hat es sich erwiesen, wenn als Komponente C) Mischungen eingesetzt werden, die zu gleichen Teilen aus Pfropfpolymerisat C/I und Polymerisat C/II bestehen.

Als Komponente D) können die erfindungsgemäßen Formmassen bis zu 50, insbesondere 0 bis 40 Gew.-% faser- oder teilchenförmige Füllstoffe oder deren Mischungen enthalten.

Als verstärkend wirkende Füllstoffe seien beispielsweise Kaliumtitanatwhisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmen E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A) bis D) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chloriden, Bromiden oder Jodiden. Ferner sind geeignete Stabilisatoren sterisch gehinderte Phenole, Hydrochinone, verschiedene substituierte Vertreter dieser Gruppe und Kombinationen derselben in Konzentrationen bis 1 Gew.-%, bezogen auf das Gewicht der Mischung.

Als UV-Stabilisatoren kann man ebenfalls diejenigen, die allgemein zu Polymeren zugesetzt werden, in Mengen bis zu 2,0 Gew.-%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 4 Gew.-% der thermoplastischen Masse zugesetzt werden, sind unter anderem Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.-%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Die erfindungsgemäßen Formmassen sind erhältlich, indem man Mischungen aus den vorstehend beschriebenen Komponenten A) bis D) bei einer Temperatur von 100 bis 300 °C, vorzugsweise von 125 bis 280 °C über einen Zeitraum von 5 min bis 100 h, vorzugsweise 20 min bis 70 h und insbesondere 20 min bis 50 h, vorzugsweise unter Inertgasatmosphäre thermisch behandelt. Als Inertgas hat sich Stickstoff als besonders geeignet erwiesen. Im allgemeinen kann bei steigender Behandlungstemperatur der Wärmebehandlung deren Zeitdauer entsprechend verringert werden.

Die Wärmebehandlung kann in der Festphase, z.B. in Taumelmischern oder Rotationsverdampfern, oder in der Schmelze, z.B. in Knetern oder Extrudern, durchgeführt werden.

Dabei ist es auch möglich, nach der thermischen Behandlung dem erhaltenen Produkt weitere Mengen an den den Komponenten A) bis D) zuzugeben, um ein gewünschtes Mischungsverhältnis einzustellen, d.h.

man kann zunächst ein Konzentrat, welches alle 4 Komponenten A) bis D) enthält, thermisch behandeln und anschließend "verdünnen", um ein bestimmtes Mengenverhältnis zu erreichen. Die Ausgangsmischungen mit den Komponenten A) bis D) werden vorzugsweise auf einem Extruder hergestellt. Entsprechende Verfahren sind an sich bekannt und in der Literatur beschrieben.

Als geeignet hat es sich erwiesen, wenn zunächst das Pfropfpolymerisat C/I und das Polymerisat C/II (Komponente C)) gemischt werden, vorzugsweise auf einem Extruder, dann extrudiert, gekühlt und granuliert. In einem zweiten Schritt wird dann dieses Granulat wieder aufgeschmolzen und mit den übrigen Komponenten A), B) und D), üblicherweise auch auf einem Extruder, vermischt, extrudiert, gekühlt und granuliert. Anschließend wird das Granulat - wie voranstehend beschrieben - thermisch behandelt. Hierbei haben sich Rotationsverdampfer als besonders geeignet erwiesen.

Die erfindungsgemäßen thermoplastischen Formmassen zeichnen sich durch ein insgesamt ausgewogenes Eigenschaftsspektrum aus und eignen sich zur Herstellung von Fasern, Folien und Formkörpern.

Beispiele

Es wurden folgende Komponenten eingesetzt:

A/1 Ein thermoplastisches Polyester-Elastomer (Blockpolyetherester), aufgebaut im wesentlichen aus Einheiten, die sich von Poly(1,4-butylenglycol), Terephthalsäure und 1,4-Butandiol ableiten, hergestellt in Anlehnung an das in der US-A 3 651 014 beschriebene Verfahren mit einer relativen Viskosität von 1,40, welches in fester Phase unter Zuführung von Stickstoff bei 180 °C mit ener Verweilzeit von 48 Stunden auf eine relative Viskostät von 2,21 getempert wurde (relative Viskosität gemessen an einer 0,46 gew.-%igen Lösung in einem Lösungsmittelgemisch aus Phenol und Chlorbenzol (Gew.-Verhältnis 1:1) bei 25 °C). Das so erhaltene Produkt besaß eine Shore-Härte von 41D (nach DIN 53 505) und einen Schmelzindex von 90 bis 100 g/10 min (230 °C, 2,16 kg Belastung nach DIN 53 735).

A/2 Ein Blockpolyetherester, aufgebaut im wesentlichen aus Einheiten, die sich von Poly(1,4-butylenglykol), Terephthalsäure und 1,4-Butandiol ableiten, mit einer Shore-Härte von 92 A bzw. 40 D (nach ASTM D-2240) und einem Schmelzindex von 4 bis 6,5 g/10 min (190 °C, 2,16 kg Belastung) (Hytrel® 4056 von DuPont de Nemours and Company).

C/I Ein Pfropfkautschuk, aufgebaut aus
- $c_1$) 60 Gew.-% einer Pfropfgrundlage aus
  - $c_{11}$) 98 Gew.-% n-Butylacrylat und
  - $c_{12}$) 2 Gew.-% Dihydrodicyclopentadienylacrylat
- und
- $c_2$) 40 Gew.-% einer Pfropfauflage aus
  - $c_{21}$) 75 Gew.-% Styrol und
  - $c_{22}$) 25 Gew.-% Acrylnitril,

hergestellt in Emulsion, mit 1,2 Gew.-%, bezogen auf den Feststoffgehalt, eines Natriumsalzes einer $C_{12}$-$C_{18}$-Paraffinsulfonsäure als Emulgator und 0,3 Gew.-%, bezogen auf den Feststoffgehalt, Kaliumpersulfat als Initiator. Die Emulsion wurde mit 2,2 mol Natriumbicarbonat pro Mol Kaliumpersulfat gepuffert. Der Endfeststoffgehalt betrug 35 Gew.-%, die Teilchen wiesen einen $d_{50}$-Wert von etwa 0,1 $\mu$m auf (d.h. jeweils 50 Gew.-% der Teilchen hatten einen Durchmesser von weniger bzw. mehr als 0,1 $\mu$m).

C/II Ein Copolymer aus Styrol und Acrylnitril im Gew.-Verhältnis 65:35 mit einer Viskositätszahl von 55 $cm^3$/g, gemessen an einer 0,5 gew.-%igen Lösung in Dimethylformamid bei 25 °C.

D Feinteiliges Talkum.

Beispiele 1 bis 6

Auf einem Zweischneckenextruder (ZSK 30 der Fa. Werner & Pfleiderer) wurden zunächst die Komponenten C/I und C/II bei einer Temperatur von 260 °C vermischt, als Strang ausgetragen, gekühlt und granuliert. In einem zweiten Extruderschritt wurde dieses Granulat auf einem Zweischneckenextruder (ZSK 30 der Fa. Werner & Pfleiderer) mit den restlichen Komponenten A) und D) bei einer Temperatur von 260 °C gemischt, als Strang ausgetragen, gekühlt und granuliert. Anschließend wurde das Granulat in einem Rotationsverdampfer unter Stickstoff-Atmosphäre bei verschiedenen Temperaturen über einen Zeitraum von 48 Stunden thermisch behandelt.

Vergleichsbeispiele V1 bis V6

Es wurde wie in den Beispielen 1 bis 6 gearbeitet, jedoch erfolgte keine thermische Behandlung des Granulats.

Die Zusammensetzungen und Eigenschaften der Abmischungen sind in der Tabelle zusammengestellt.

Die Kerbschlagzähigkeit ($a_k$) wurde nach DIN 53 453 bei -20 ° C bestimmt, die Lochkerbschlagzähigkeit ($a_{kl}$) nach DIN 53 753 bei -40 ° C und die Reißdehnung ($\epsilon_R$) nach DIN 53 455 mit einer Zuggeschwindigkeit von 50 mm/Minute. Die Prüfungen erfolgten an Kleinnormstäbchen mit einer Länge von 50 mm und einem Querschnitt von 4 mm x 6 mm, die bei 260 ° C (Formtemperatur: 60 ° C) gespritzt wurden.

Tabelle

| Beispiel | Zusammensetzung [Gew.-%] A/1 | A/2 | C/I | C/II | D | Temperatur der thermischen Behandlung [°C] | $a_k$ [kJ/m2] | $a_{kl}$ [kJ/m2] | $\epsilon_R$ [%] |
|---|---|---|---|---|---|---|---|---|---|
| 1 | 29,9 | - | 35 | 35 | 0,1 | 170 | n.g.* | 55 | n.g. |
| 2 | 54,9 | - | 22,5 | 22,5 | 0,1 | 190 | n.g. | kein Bruch | n.g. |
| 3 | - | 1,9 | 49 | 49 | 0,1 | 215 | 5 | n.g. | 41 |
| 4 | - | 4,9 | 47,5 | 47,5 | 0,1 | 125 | 7 | n.g. | 38 |
| 5 | - | 19,9 | 40 | 40 | 0,1 | 215 | 5 | n.g. | 50 |
| 6 | - | 54,9 | 22,5 | 22,5 | 0,1 | 125 | 18 | n.g. | n.g. |
| V1 | 29,9 | - | 35 | 35 | 0,1 | - | n.g. | 46 | n.g. |
| V2 | 54,9 | - | 22,5 | 22,5 | 0,1 | - | n.g. | 73 | n.g. |
| V3 | - | 1,9 | 49 | 49 | 0,1 | - | 1 | n.g. | 24 |
| V4 | - | 4,9 | 47,5 | 47,5 | 0,1 | - | 1 | n.g. | 22 |
| V5 | - | 19,9 | 40 | 40 | 0,1 | - | 1 | n.g. | 40 |
| V6 | - | 54,9 | 22,5 | 22,5 | 0,1 | - | 11 | n.g. | n.g. |

*n.g. ≙ nicht gemessen

**Patentansprüche**

**1.** Thermoplastische Formmassen, erhältich durch thermische Behandlung einer Mischung aus

A) 1 bis 99 Gew.-% eines thermoplastischen Polyester-Elastomeren

B) 0 bis 50 Gew.-% eines Polyesters

C) 1 bis 99 Gew.-% eines Pfropfpolymerisats C/I, aufgebaut aus

$c_1$) 30 bis 90 Gew.-% einer Pfropfgrundlage aus einem kautschukelastischen Polymeren mit einer Glasübergangstemperatur von unter 0°C

$c_2$) 10 bis 70 Gew.-% einer Pfropfauflage aus

$c_{21}$) 50 bis 90 Gew.-% Styrol oder substituierten Styrolen der allgemeinen Formel I

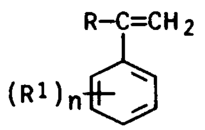

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen

$c_{22}$) 10 bis 50 Gew.-% Acrylnitril oder Methacrylnitril oder deren Mischungen

$c_{23}$) 0 bis 30 Gew.-% eines polymerisierbaren Monomeren mit Carboxyl-, Carboxylderivat-, Hydroxyl- oder Epoxygruppen

oder

$c_{24}$) 30 bis 100 Gew.-% Methylmethacrylat

$c_{25}$) 0 bis 70 Gew.-% Styrol oder substituierten Styrolen der allgemeinen Formel I oder deren Mischungen

$c_{26}$) 0 bis 50 Gew.-% Acrylnitril oder Methacrylnitril oder deren Mischungen

$c_{27}$) 0 bis 30 Gew.-% eines polymerisierbaren Monomeren mit Carboxyl-, Carboxylderivat, Hydroxyl- oder Epoxygruppen

oder eines Polymerisats C/II aus

$c_3$) 50 bis 90 Gew.-% Styrol oder substituierten Styrolen der allgemeinen Formel I oder deren Mischungen

$c_4$) 10 bis 50 Gew.-% Acrylnitril oder Methacrylnitril oder deren Mischungen

$c_5$) 0 bis 30 Gew.-% eines polymerisierbaren Monomeren mit Carboxyl-, Carboxylderivat-, Hydroxyl- oder Epoxygruppen

oder

$c_6$) 30 bis 100 Gew.-% Methylmethacrylat

$c_7$) 0 bis 70 Gew.-% Styrol oder substituierten Styrolen der allgemeinen Formel I oder deren Mischungen

$c_8$) 0 bis 50 Gew.-% Acrylnitril oder Methacrylnitril oder deren Mischungen

$c_9$) 0 bis 30 Gew.-% eines polymerisierbaren Monomeren mit Carboxyl-, Carboxylderivat-, Hydroxyl- oder Epoxygruppen

oder Mischungen aus C/I und C/II

und

D) 0 bis 50 Gew.-% faser- oder teilchenförmige Füllstoffe oder deren Mischungen

bei einer Temperatur im Bereich von 100°C bis 300°C über einen Zeitraum von 5 Minuten bis 100 Stunden.

**2.** Thermoplastische Formmassen nach Anspruch 1, erhältlich aus Einheiten

und 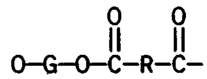

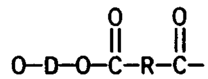

wobei

G einen zweiwertigen Rest, der nach der Entfernung der terminalen Hydroxylgruppen aus einem Poly(alkylenoxid)glykol verbleibt,

D einen zweiwertigen Rest, der nach Entfernung der terminalen Hydroxylgruppen aus einem zweiwertigen Diol verbleibt, und

R einen zweiwertigen Rest, der nach Entfernung der Carboxylgruppen aus einer Dicarbonsäure verbleibt,

darstellen, als Komponente A).

**3.** Thermoplastische Formmassen nach Anspruch 1, dadurch gekennzeichnet, daß die Pfropfgrundlage $c_1$) aufgebaut ist aus

$c_{11}$) 95 bis 99,9 Gew.-% n-Butylacrylat und/oder 2-Ethylhexylacrylat und

$c_{12}$) 0,1 bis 5 Gew.-% eines di- oder trifunktionellen Monomeren.

**4.** Thermoplastische Formmassen nach Anspruch 1, dadurch gekennzeichnet, daß die Pfropfgrundlage $c_1$) aufgebaut ist aus

$c_{13}$) 50 bis 100 Gew.-% eines konjugierten Diens

$c_{14}$) 0 bis 50 Gew.-% Styrol, Acrylnitril, Methacrylnitril und/oder $C_1$- bis $C_8$-Alkylestern der Acrylsäure oder Methacrylsäure und

$C_{15}$) 0 bis 5 Gew.-% eines vernetzenden Monomeren.

**5.** Verfahren zur Herstellung von thermoplastischen Formmassen gemäß den Verfahrensbedingungen von Anspruch 1.

**6.** Verwendung der thermoplastischen Formmassen gemäß den Ansprüchen 1 bis 4 zur Herstellung von Fasern, Folien und Formkörpern.

**7.** Formkörper, erhältlich aus thermoplastischen Formmassen gemäß den Ansprüchen 1 bis 4.